# EUROPEAN PATENT SPECIFICATION

(11) **EP 1 163 842 B1**
(45) Date of publication and mention of the grant of the patent: **28.11.2007**
(21) Application number: 01203673.7
(22) Date of filing: 28.03.1997
(51) Int. Cl.: A01K 1/12, A01J 5/017, A01J 7/04

(54) **A construction including an implement for milking animals**
Konstruktion mit Vorrichtung zum Melken von Tieren
Construction comprenant un dispositif de traite d'animaux

(30) Priority: 04.04.1996 NL 1002792
(43) Date of publication of application: 19.12.2001
(62) Divisional of application: 97914653.7
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 091 892
- EP-A- 0 689 761
- EP-A- 0 689 762
- DE-C- 4 330 894

## Description

The invention relates to a construction according to the preamble of claim 1.

Such construction is known from EP-A-0091892.

It is an object of the invention to improve the above-described construction.

According to the invention this is achieved by the features as described in claim 1.

In accordance with a preferred embodiment, the carrousel comprises a platform, which is rotatable about a central shaft.

In order to be able to enter the rotary platform, according to a preferred embodiment, between two milk boxes there is provided a walking path which is closed off by a door. According to a preferred embodiment, the animals can enter the carrousel or the conveyor belt via a computer-controlled entrance and exit door located next to each other. In order to be able to select which animals are to enter the carrousel or the conveyor belt, according to a preferred embodiment, there is provided a cow identification system near the entrance door.

In accordance with a preferred embodiment, near the entrance door, along the circumference of the carrousel or along the conveyor belt, there is provided a guide means, such as a rail, via which the foremilking device and/or the udder massage device and/or the udder washing device and/or a milking robot are movable. According to a preferred embodiment, the guide means is disposed along a sector of approximately 45° of the circumference of the platform. In accordance with a preferred embodiment of the invention, along the circumference of the carrousel or along the conveyor belt there is provided a second guide means, such as a rail, via which a second robot arm is movable, by means of which teat cups which may have fallen down can be reconnected to the teats of an animal to be milked. According to a preferred embodiment, the second guide means is disposed along a sector of approximately 240° of the circumference of the platform. In an embodiment in accordance with the invention, the milk boxes are provided with a detector, such as a laser, an ultrasonic sensor, etc., for defining the teat coordinates of an animal in the relevant milk box. In accordance with a preferred embodiment, the detectors are fitted in the floor of the carrousel or in that of the conveyor belt. According to a preferred embodiment, each milk box is provided with a milking robot. In accordance with a preferred embodiment, the milking robot is arranged near the inside of the milk box on the platform of the carrousel or near the conveyor belt.

For a better understanding of the invention, reference will now be made to the accompanying drawings, in which:
Figure 1 shows a plan view of a first embodiment of a milking carrousel according to the invention, and
Figure 2 shows a plan view of a second embodiment of a carrousel according to the invention.

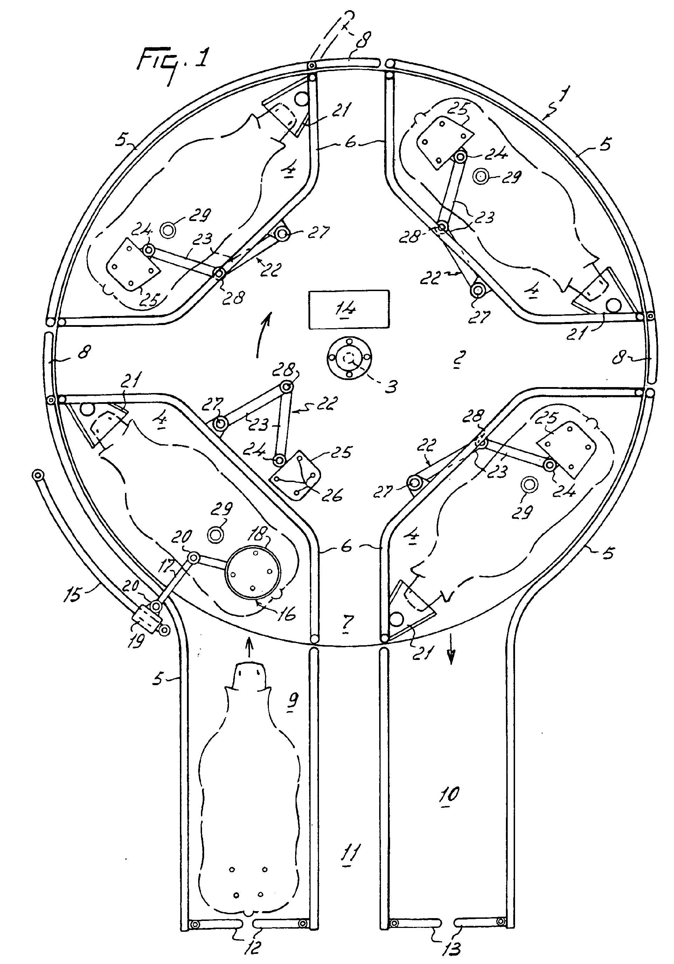

Figure 1 shows a plan view of a carrousel 1, which comprises a circular platform 2 which is rotatable about a central shaft 3 driven by a (non-shown) motor. On the platform 2 there are provided four milk boxes 4, which are confined at the outside of the platform 2 by a fixedly arranged curved fencing 5 which is connected to the outer circumference of the platform 2. The milk boxes 4 are further confined at their inside by also curved fencings 6, which abut on the outer fencing 5. The front side and the rear side of a milk box 4, which are confined by the fencing 6, are spaced apart from the rear side respectively the front side of an adjacent milk box 4. The distance between the front side of a fencing 6 of the milk box 4 and the rear side of a fencing 6 of the milk box 4 is such that there is created a walking path 7 via which an operating person can enter the platform 2. In order to make it possible to enter a walking path 7, the curved outer fencing 5 is interrupted at three places by a door 8. The carrousel 1 is further provided with an entrance gate 9 and an exit gate 10 for the animals, which gates are located at some distance next to each other. One side of the entrance and exit gate 9, 10 is constituted by a turned off part of the fencing 5, whereas the other side is constituted by a fencing 11. The entrance and exit gate 9, 10 are provided with an entrance and exit door 12, 13 respectively. Near the entrance door 12 there is arranged a (non-shown) cow identification system by means of which the identity of the animals can be established, whereafter there can be determined whether an animal is allowed to enter the entrance gate 9. With the aid of a computer 14, disposed near the shaft 3 of the platform 2, the computer-controlled entrance door 12 and the exit door 13 can be automatically controlled.

Near the entrance door 12, along the outer circumference of the platform 2 along a sector of approximately 45°, there is further provided a curved rail 15, via which a cleaning/foremilking device 16 can be moved together with the platform 2. By means of the cleaning/foremilking device 16 the teats and/or the udder can be washed and be foremilked. The cleaning/foremilking device 16 comprises a robot arm 17, which is provided at one end with a cleaning/foremilking element 18, capable of being connected to the udder and/or the teats, and at its other end with a guiding sleeve 19 which is movable via the rail 15. The robot arm 17 is further capable of pivoting on two substantially vertical hinge pins 20.

The milk boxes 4 are provided at their front sides with a feeding trough 21 over which there is arranged a (non-shown) concentrate rationing system, by means of which concentrate can be distributed to the animals in the milk box 4. On the fencing 6 of a milk box 4 there is further provided a milking robot 22, by means of which an animal can be automatically milked. The milking robot 22 comprises a robot arm 23, which at its free end is provided with a bearing surface 25 capable of pivoting on a vertical hinge pin 24 and carrying teat cups 26. At its other end the robot arm 23 is pivotably connected on a vertical hinge pin 27 with the fencing 6. The robot arm 23 further comprises a third vertical hinge pin 28. In the floor of the milk box 4 there is furthermore fitted a detector 29, such as a laser or an ultrasonic sensor, for defining the teat coordinates of an animal in the relevant milk box.

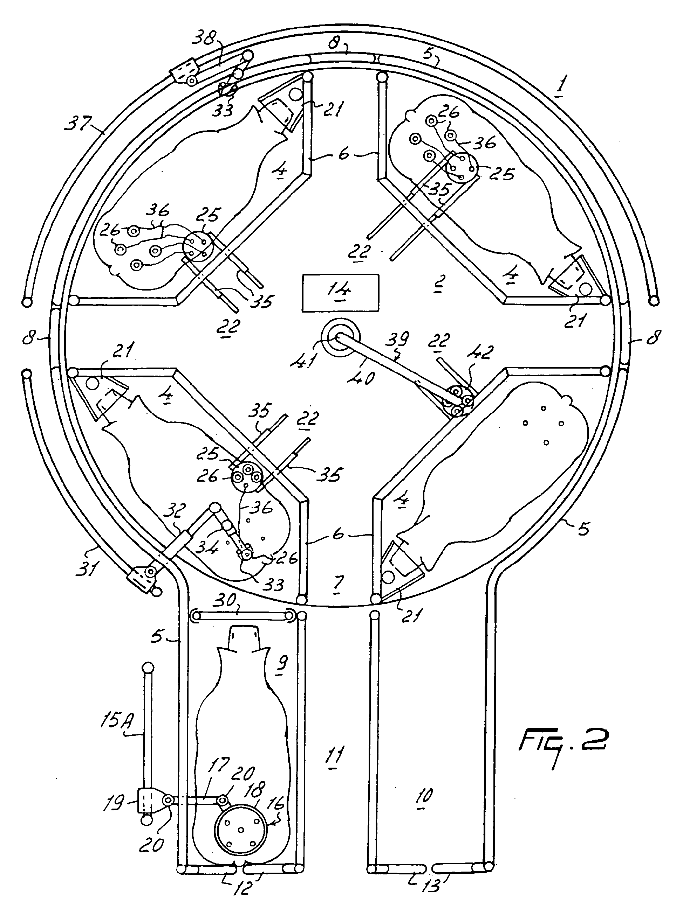

Figure 2 shows a second embodiment of a carrousel 1 in accordance with the invention, in which embodiment parts corresponding to those shown in a first embodiment according to Figure 1 are indicated by the same reference numerals.

In the present embodiment, near the entrance gate 9, the cleaning/foremilking device 16 is disposed so as to be movable via the rail 15A. At the front side of the entrance gate 9 there is provided a second entrance door 30 giving access to the platform 2 of the carrousel 1. The second entrance door 30 is controlled by the computer 14. Near the entrance gate 9, along a sector of approximately 45° of the circumference of the platform 2, there is provided a second rail 31 via which there can be moved a second robot arm 32 provided at its end with a gripper 33. The second robot arm 32 is provided with a detector 34, which is designed in the present embodiment as a laser, by means of which the teat coordinates of an animal to be milked can be defined.

Near the fencing 6 of a milk box 4 there is furthermore arranged a bearing surface 25 carrying teat cups 26, which bearing surface 25 is movable via two longitudinal guide means 35 which are disposed on the platform 2. By means of the gripper 33 the teat cups 26 can be removed individually from the bearing surface 25 and connected to the teats of an animal to be milked. Via withdrawing members 36 the teat cups 26 remain connected with the bearing surface 25. After milking has finished, the withdrawing members 36 are activated by the computer 14 in such a way that the teat cups 26 are drawn back to the bearing surface 25.

At some distance from the second rail 31, along a sector of approximately 240° of the circumference of the platform 2, there is provided a third rail 37, via which a third robot arm 38 including a gripper 33 and a detector 34 is movable. By means of the third robot arm 38 teat cups 26 which may have fallen down can be reconnected.

The carrousel 1 is further provided with a teat cup cleaning device 39 by means of which the teat cups 26, after having fallen down, or after having been used for milking, can be cleaned. The teat cup cleaning device 39 comprises an arm 40, which is connected at one end with a vertical shaft 41 disposed above the shaft 3 of a platform 2. The vertical shaft 41 is driven by a (non-shown) step motor, such that the teat cup cleaning device 39 can reach all the teat cups 26. At the end of the arm 40 there is a bearing surface 42 and therebelow there is located a (non-shown) spraying device which can be connected to the teat cups 26. By means of spraying nozzles of the spraying device a cleaning and/or disinfecting fluid can be guided into or along the teat cups 26. After the teat cups 26 have been cleaned, the teat cup cleaning device 39 is disconnected.

The speed of rotation at which the platform 2 is driven in the two embodiments by the (non-shown) motor is controlled by an adjusting mechanism included in the computer. The adjusting mechanism cooperates with the memory of the computer in which historical data regarding the estimated milking time or the estimated residence time are stored. In an alternative embodiment it is furthermore possible that in the memory of the computer there are stored historical data regarding the estimated milk yield, while the computer defines, on the basis of these data and the milk speed determined by a (non-shown) milk speed meter during milking, the estimated milking time. Hereby it is possible that the computer determines the estimated milking time or the estimated residence time, in the first case on the basis of the average milking time of the animals present in the carrousel, and in the second case on the basis of the average residence time of the animals in the carrousel. Moreover it is also possible that the computer determines the estimated milking time or the estimated residence time, in the first case on the basis of the longest estimated milking time of an animal in the carrousel, and in the second case on the basis of the longest estimated residence time of an animal in the carrousel.

In the present embodiments the carrousel 1 comprises four milk boxes; however, it will be obvious that the carrousel can comprise any number of milk and/or wash boxes.

## Claims

1. A construction including an implement for milking animals, such as cows, said implement comprising a carrousel (1) or a conveyor belt, including at least one milking robot (22) and a number of milk boxes (4), and in that the carrousel (1) or the conveyor belt comprises at least one udder massage device, one udder cleaning device (16) and one concentrate rationing device (21), **characterized in that** the carrousel (1) or the conveyor belt comprises at least one foremilking device and **in that** between two milk boxes (4) there is provided a walking path (7).

2. A construction as claimed in claim 1, **characterized in that** the carrousel comprises a platform which is rotatable about a central shaft.

3. A construction as claimed in claim 1 or 2, **characterized in that** in the outer wall of the carrousel (1) or the conveyor belt there is provided a door (8) giving access to the walking path (7).

4. A construction as claimed in any one of the preceding claims, **characterized in that** the carrousel (1) or the conveyor belt is provided with a computer-controlled entrance and exit door (12; 13).

5. A construction as claimed in claim 4, **characterized in that** the entrance and exit door (12; 13) are located next to each other.

6. A construction as claimed in claim 4 or 5, **characterized in that** there is provided a cow identification system near the entrance door (12).

7. A construction as claimed in any one of the preceding claims, **characterized in that** near the entrance door (12), along the circumference of the carrousel (1) or along the conveyor belt, there is provided a guide means, such as a rail (15; 31), via which the foremilking device and/or the udder massage device and/or the udder cleaning device (16) and/or a milking robot (22) are movable.

8. A construction as claimed in claim 2 or 7, **characterized in that** the guide means (15; 31) is disposed along a sector of approximately 45° of the circumference of the platform.

9. A construction as claimed in claim 7 or 8, **characterized in that** along the circumference of the carrousel (1) or along the conveyor belt, there is provided a third guide means, such as a rail (37), via which a third robot arm (38) is movable, by means of which teat cups (26) which may have fallen down can be reconnected to the teats of an animal to be milked.

10. A construction as claimed in claim 2 or 9, **characterized in that** the third guide means (37) is provided along a sector of approximately 240° of the circumference of the platform.

11. A construction as claimed in any one of the preceding claims, **characterized in that** the milk boxes (4) are provided with a detector (29), such as a laser, an ultrasonic sensor, etc., for defining the teat coordinates of an animal in the relevant milk box.

12. A construction as claimed in claim 11, **characterized in that** the detectors (29) are fitted in or on the floor of the carrousel (1) or the conveyor belt.

13. A construction as claimed in any one of the preceding claims, **characterized in that** each milk box (4) is provided with a milking robot (22).

14. A construction as claimed in claim 2 or 13, **characterized in that** the milking robot (22) is arranged near the inside of the milk box (4) on the platform (2) of the carrousel (1) or near the conveyor belt.

15. A construction as claimed in any one of the preceding claims, **characterized in that** the implement comprises four milk boxes and four robots.

## Patentansprüche

1. Anlage mit einer Vorrichtung zum Melken von Tieren, wie z. B. Kühen, wobei die Vorrichtung ein Karussell (1) oder ein Förderband mit mindestens einem Melkroboter (22) und einer Anzahl von Melkboxen (4) umfasst, wobei das Karussell (1) oder das Förderband mindestens eine Eutermassagevorrichtung, eine Euterreinigungsvorrichtung (16) und eine Kraftfutterzuteilungsvorrichtung (21) umfasst,
**dadurch gekennzeichnet, dass** das Karussell (1) oder das Förderband mindestens eine Vormelkvorrichtung umfasst, und dass zwischen zwei Melkboxen (4) ein Laufgang (7) angeordnet ist.

2. Anlage nach Anspruch 1,
**dadurch gekennzeichnet, dass** das Karussell eine Plattform umfasst, die um eine zentrale Welle drehbar ist.

3. Anlage nach Anspruch 1 oder 2,
**dadurch gekennzeichnet, dass** in der Außenwand des Karussells (1) oder des Förderbandes eine Tür (8) vorhanden ist, die Zutritt zum Laufgang (7) gewährt.

4. Anlage nach einem der vorhergehenden Ansprüche,
**dadurch gekennzeichnet, dass** das Karussell (1) oder das Förderband mit einer rechnergesteuerten Eingangs- und Ausgangstür (12; 13) versehen ist.

5. Anlage nach Anspruch 4,
**dadurch gekennzeichnet, dass** die Eingangstür und die Ausgangstür (12; 13) nebeneinander angeordnet sind.

6. Anlage nach Anspruch 4 oder 5,
**dadurch gekennzeichnet, dass** nahe der Eingangstür (12) ein Kuhidentifikationssystem angeordnet ist.

7. Anlage nach einem der vorhergehenden Ansprüche,
**dadurch gekennzeichnet, dass** nahe der Eingangstür (12) entlang dem Umfang des Karussells (1) oder entlang dem Förderband eine Führungsvorrichtung, wie z. B. eine Schiene (15; 31), angebracht ist, auf der die Vormelkvorrichtung und/oder die Eutermassagevorrichtung und/oder die Euterreinigungsvorrichtung (16) und/oder ein Melkroboter (22) bewegbar sind.

8. Anlage nach Anspruch 2 oder 7,
**dadurch gekennzeichnet, dass** die Führungsvorrichtung (15; 31) entlang einem Sektor von etwa 45° des Umfanges der Plattform angeordnet ist.

9. Anlage nach Anspruch 7 oder 8,
**dadurch gekennzeichnet, dass** entlang dem Umfang des Karussells (1) oder entlang dem Förderband eine dritte Führungsvorrichtung, wie z. B. eine Schiene (37), angeordnet ist, auf der ein dritter Roboterarm (38) bewegbar ist, mittels dessen eventuell abgefallene Zitzenbecher (26) wieder an die Zitzen eines zu melkenden Tieres angeschlossen werden können.

10. Anlage nach Anspruch 2 oder 9,
**dadurch gekennzeichnet, dass** die dritte Führungsvorrichtung (37) entlang einem Sektor von etwa 240° des Umfanges der Plattform angeordnet ist.

11. Anlage nach einem der vorhergehenden Ansprüche,
**dadurch gekennzeichnet, dass** die Melkboxen (4) mit einem Detektor (29), wie z. B. einem Laser, einem Ultraschallsensor usw., versehen sind, um die Zitzenkoordinaten eines Tieres in der betreffenden Melkbox zu ermitteln.

12. Anlage nach Anspruch 11,
**dadurch gekennzeichnet, dass** die Detektoren (29) in oder auf dem Boden des Karussells (1) oder des Förderbandes angeordnet sind.

13. Anlage nach einem der vorhergehenden Ansprüche,
**dadurch gekennzeichnet, dass** jede Melkbox (4) mit einem Melkroboter (22) versehen ist.

14. Anlage nach Anspruch 2 oder 13,
**dadurch gekennzeichnet, dass** der Melkroboter (22) nahe der Innenseite der Melkbox (4) auf der Plattform (2) des Karussells (1) oder nahe dem Förderband angeordnet ist.

15. Anlage nach einem der vorhergehenden Ansprüche,
**dadurch gekennzeichnet, dass** die Vorrichtung vier Melkboxen und vier Roboter umfasst.

## Revendications

1. Installation comprenant un appareil servant à traire des animaux, tels que des vaches, ledit appareil comportant un carrousel (1) ou un tapis roulant, comprenant au moins un robot de traite (22) et un certain nombre de box de traite (4), le carrousel (1) ou le tapis roulant comportant au moins un dispositif de massage des pis, un dispositif de lavage des pis (16) et un dispositif de rationnement d'aliments concentrés (21), **caractérisé en ce que** le carrousel (1) ou le tapis roulant comportent au moins un dispositif de tirage des premiers jets et qu'une voie de passage (7) est prévue entre deux box de traite (4).

2. Installation selon la revendication 1, **caractérisée en ce que** le carrousel comporte une plateforme qui est rotative autour d'un arbre central.

3. Installation selon la revendication 1 ou 2, **caractérisée en ce qu'**une porte (8) qui donne accès à la voie de passage (7) est prévue dans la paroi extérieure du carrousel (1) ou du tapis roulant.

4. Installation selon l'une quelconque des revendications précédentes, **caractérisée en ce que** le carrousel (1) ou le tapis roulant sont équipés d'une porte d'entrée et d'une porte de sortie commandées par ordinateur (12, 13).

5. Installation selon la revendication 4, **caractérisée en ce que** les portes d'entrée et de sortie (12, 13) se situent l'une à côté l'autre.

6. Installation selon la revendication 4 ou 5, **caractérisée en ce qu'**un système d'identification des vaches est prévu à proximité de la porte d'entrée (12).

7. Installation selon l'une quelconque des revendications précédentes, **caractérisée en ce qu'**il est prévu à proximité de la porte d'entrée (12), le long de la circonférence du carrousel (1) ou le long du tapis roulant, un moyen de guidage, tel qu'un rail (15, 31), par le biais duquel le dispositif de tirage des premiers jets et/ou le dispositif de massage des pis et/ou le dispositif de lavage des pis (16) et/ou un robot de traite (22) peuvent être déplacés.

8. Installation selon la revendication 2 ou 7, **caractérisée en ce que** le moyen de guidage (15, 31) est disposé le long d'un secteur d'environ 45° de la circonférence de la plateforme.

9. Installation selon la revendication 7 ou 8, **caractérisée en ce qu'**il est prévu le long de la circonférence du carrousel (1) ou le long du tapis roulant, un troisième moyen de guidage, tel qu'un rail (37), par le biais duquel un troisième bras de robot (38) peut être déplacé, grâce auquel des gobelets trayeurs (26) susceptibles d'être tombés peuvent être replacés sur les trayons d'un animal à traire.

10. Installation selon la revendication 2 ou 9, **caractérisée en ce que** le troisième moyen de guidage (37) est disposé le long d'un secteur d'environ 240° de la circonférence de la plateforme.

11. Installation selon l'une quelconque des revendications précédentes, **caractérisée en ce que** les box de traite (4) sont équipés d'un détecteur (29), tel qu'un laser, un capteur à ultrasons, etc., servant à définir les coordonnées de trayon d'un animal dans le box de traite approprié.

12. Installation selon la revendication 11, **caractérisée en ce que** les détecteurs (29) sont installés dans ou sur le plancher du carrousel (1) ou du tapis roulant.

13. Installation selon l'une quelconque des revendications précédentes, **caractérisée en ce que** chaque box de traite (4) est équipé d'un robot de traite (22).

14. Installation selon la revendication 2 ou 13, **caractérisée en ce que** le robot de traite (22) est placé à proximité de l'intérieur du box de traite (4) sur la plateforme (2) du carrousel (1) ou à proximité du tapis roulant.

15. Installation selon l'une quelconque des revendications précédentes, **caractérisée en ce que** l'appareil comporte quatre box de traite et quatre robots.
